# EUROPÄISCHE PATENTSCHRIFT

(11) **EP 4 015 818 B1**
(45) Veröffentlichungstag und Bekanntmachung des Hinweises auf die Patenterteilung: **16.10.2024**
(21) Anmeldenummer: 21210637.1
(22) Anmeldetag: 26.11.2021
(51) Int. Cl.: F03D 80/60, F03D 80/80

(54) **WINDENERGIEANLAGE**
WIND ENERGY SYSTEM
ÉOLIENNE

(30) Priorität: 18.12.2020 DE 102020134078
(43) Veröffentlichungstag der Anmeldung: 22.06.2022
(73) Patentinhaber: Wobben Properties GmbH, 26607 Aurich (DE)
(72) Erfinder: Busemann, Steffen, 26842 Ostrhauderfehn (DE); Wollgam, Sven, 26603 Aurich (DE)
(74) Vertreter: Eisenführ Speiser

(56) Entgegenhaltungen:
- CN-A- 106 523 282
- DE-A1- 102012 212 619
- US-A1- 2016 065 036
- US-A1- 2019 277 263

## Beschreibung

Die vorliegende Erfindung betrifft eine Windenergieanlage.

Eine Windenergieanlage weist typischerweise einen Generator in einer Gondel der Windenergieanlage auf, welcher kinetische Energie in elektrische Energie umwandelt. Hierbei kommt es zu elektrischen Verlusten, welche in Verlustwärme umgewandelt werden. Daher kann es notwendig sein, einen Generator einer Windenergieanlage zu kühlen. Hierbei kann prinzipiell eine Luftkühlung oder eine Flüssigkeitskühlung vorgesehen werden.

In der prioritätsbegründenden deutschen Patentanmeldung hat das Deutsche Patent- und Markenamt die folgenden Dokumente recherchiert: DE 10 2010 000 756 A1, DE 10 2012 212 619 A1, US 2019 / 0 277 263 A1 und EP 3 527 820 B1. Einschlägiger Stand der Technik ist außerdem in CN 106 523 282 B offenbart.

Es ist daher eine Aufgabe der vorliegenden Erfindung, eine Windenergieanlage sowie ein Windenergieanlagen-Kühlsystem vorzusehen, welches eine effiziente Kühlung eines Generators in einer Gondel bzw. in dem Rotor der Windenergieanlage ermöglicht.

Diese Aufgabe wird durch eine Windenergieanlage nach Anspruch 1 gelöst.

Somit wird eine Windenergieanlage vorgesehen. Die Windenergieanlage weist eine Gondel mit einem ersten Ende und einem zweiten Ende, mindestens einem Lufteinlass sowie einem Gondelgehäuse mit einem Gondelinnenraum auf. Eine erste Wärmequelle in Form eines elektrischen Generators ist vorgesehen, wobei der Generator elektrische Energie und erste Verlustwärme erzeugt. Eine zweite Wärmequelle in Form von mindestens einer elektrischen Vorrichtung zur Umwandlung der von dem Generator erzeugten elektrischen Energie ist in dem Gondelinnenraum vorgesehen, wobei die elektrischen Vorrichtungen zweite Verlustwärme erzeugen und in dem Gondelgehäuse angeordnet sind. Ein Kühlungssystem mit einem Flüssigkeitskühlsystem und einem Luftkühlsystem für die erste und zweite Wärmequelle ist vorgesehen. In dem Gondelinnenraum ist eine Luftaufbereitung vorgesehen ist, welche einen Tropfenabscheider und einen Rückkühler aufweist. Der Tropfenabscheider ist dazu ausgestaltet, die durch den Lufteinlass einströmende Luft von Flüssigkeitstropfen zu befreien. Das Luftkühlungssystem weist einen Lüfter oder einen Lüftersatz in Form einer Mehrzahl von Lüftern in einem einzigen Gehäuse in dem Gondelinnenraum auf. Der Lüfter oder der Lüftersatz erzeugt eine Luftströmung in Luftströmungsrichtung L innerhalb der Gondel, welche den Rückkühler umströmt. Das Flüssigkeitskühlsystem weist eine Kühlflüssigkeit auf und ist zumindest mit der zweiten Wärmequelle gekoppelt und dazu ausgestaltet, die zweite Wärmequelle zu kühlen. Das Flüssigkeitskühlsystem ist mit dem Rückkühler gekoppelt, welcher als Wärmetauscher dient, wobei die Luftströmung in Luftstromrichtung den Rückkühler kühlt, der wiederum die Kühlflüssigkeit kühlt. Die Luftströmung umströmt die erste und zweite Wärmequelle und kühlt damit die erste und zweite Wärmequelle.

Gemäß einem Aspekt der vorliegenden Erfindung ist ein Teil des Generators, nämlich der Stator, in oder an der Gondel drehfest vorgesehen. Der Rotor des Generators kann sich dann zusammen mit dem aerodynamischen Rotor (d. h. der Spinner und die Rotorblätter) drehen. Der elektrische Generator stellt eine erste Wärmequelle oder Wärmeerzeuger dar. Innerhalb der Gondel sind weitere elektrische Vorrichtungen vorgesehen, welche Verlustwärme erzeugen. Diese elektrischen Vorrichtungen stellen eine zweite Wärmequelle oder einen zweiten Satz von Wärmequellen dar. Diese elektrischen Vorrichtungen sind beispielsweise Umrichterschränke zum Umwandeln einer Gleichspannung in eine Wechselspannung, Transformatoren zum Transformieren einer Spannung und/oder ein Gleichrichter zum Gleichrichten der Ausgangsspannung des Generators. Des Weiteren weist die Gondel ein Gehäuse mit einem Lufteinlass auf. Der Lufteinlass ist optional an einem windströmungsabgewandten Ende der Gondel vorgesehen. Der aerodynamische Rotor mit dem Spinner und den Rotorblättern ist dann auf der anderen Seite, nämlich der windströmungszugewandten Seite der Gondel, vorgesehen. Innerhalb der Gondel ist ein Lüfter oder ein Lüftersatz (mit mehreren Lüftern) in einem Gehäuse vorgesehen. Der Lüfter oder der Lüftersatz befinden sich an einer festen Position innerhalb der Gondel. Der Lüfter kann in oder an dem Lufteinlass, zwischen der ersten und zweiten Wärmequelle oder in Luftströmungsrichtung vor dem Generator (und innerhalb des Spinners) vorgesehen sein.

In der Gondel ist eine Luftaufbereitung mit einem Tropfenabscheider und einem Rückkühler (als Teil eines Flüssigkeitskühlsystems) vorgesehen.

Gemäß einem Aspekt der vorliegenden Erfindung ist der Lüfter bzw. der Lüftersatz der einzige aktive Luft-Strömungserzeuger für die Kühl-Luftströmung innerhalb der Gondel. Es sei daraufhin gewiesen, dass weitere dedizierte Lüfter z.B. für bzw. innerhalb des Generator oder in oder an weiteren wärmeerzeugenden Einheiten (z.B. Leistungselektronik, Transformator) vorgesehen sein können, die aber nur der Kühlung der jeweiligen Komponenten dienen. Dazu können diese Lüfter in dem Gehäuse integriert sein.

Die Windströmung wird durch den Wind erzeugt und trifft zuerst auf den aerodynamischen Rotor und dann auf die Gondel. Die Luftströmung der Luftkühlung wird durch den Lüfter erzeugt und strömt innerhalb der Gondel von dem Lufteinlass durch die Gondel, durch den Generator und durch die Luftauslässe nach außen.

Die Richtung der Luftströmung ist entgegengesetzt zur Richtung der Windströmung.

Die Windenergieanlagen-Kühlung gemäß der Erfindung stellt eine Hybridkühlung in oder an der Gondel dar und weist ein Flüssigkeitskühlsystem sowie ein Luftkühlsystem auf. Das Flüssigkeitskühlsystem weist einen Rückkühler als Wärmetauscher auf. Der Rückkühler befindet sich an einer Luftströmung der Luftkühlung, die durch den Lüfter erzeugt wird. Vorzugsweise ist der Rückkühler im Bereich des Lufteinlasses sowie innerhalb der Gondel vorgesehen, so dass die durch den Lufteinlass eingesaugte kalte Außenluft den Rückkühler kühlen kann. Damit dient der Rückkühler als Wärmetauscher oder Wärmeübertrager, so dass die durch die erste und/oder zweite Wärmequelle erwärmte Kühlflüssigkeit des innerhalb des Flüssigkeitskühlsystems durch die durch den Lufteinlass einströmende Außenluft gekühlt wird.

Gemäß einem Aspekt der vorliegenden Erfindung wird insbesondere die zweite Wärmequelle zumindest teilweise durch das Flüssigkeitskühlsystem gekühlt.

Gemäß einem weiteren Aspekt der vorliegenden Erfindung ist ein Tropfenabscheider innerhalb der Gondel und im Bereich des Lufteinlasses vorgesehen. Der Tropfenabscheider dient dazu, Wassertropfen aus der einströmenden Außenluft zu entfernen.

Gemäß einem weiteren Aspekt der vorliegenden Erfindung kann ein Luftfilter in Luftströmungsrichtung hinter dem Tropfenabscheider innerhalb der Gondel vorgesehen sein. Der Luftfilter dient dazu, Verunreinigungen aus der Luft herauszufiltern. Dadurch, dass der Rückkühler des Flüssigkeitskühlsystems innerhalb der Gondel und hinter dem Lufteinlass vorgesehen ist, streicht im Wesentlichen die komplett durch den Lufteinlass einströmende Luft durch den Rückkühler. Damit kann eine effektive Kühlung der Kühlflüssigkeit des Flüssigkeitskühlsystems erreicht werden.

Ein weiterer Aspekt dabei ist, dass die einströmende Luft, welche durch den Wärmetauscher in Form des Rückkühlers streicht, ebenfalls erwärmt wird. Anschließend strömt die Luft an der zweiten Wärmequelle (elektrische Vorrichtung, z. B. Umrichterschränke, Transformatoren, Leistungselektronik, Gleichrichter) vorbei und kühlt diese elektrischen Vorrichtungen ebenfalls. Diese elektrischen Vorrichtungen können insbesondere durch das Flüssigkeitskühlsystem gekühlt werden. Zusätzlich dazu werden diese elektrischen Vorrichtungen ebenfalls durch den Luftstrom gekühlt, welcher durch den Lüfter bzw. den Lüftersatz innerhalb der Gondel erzeugt wird. Anschließend strömt die Luft an und/oder durch den Generator (Stator, Rotor) und kühlt den Rotor und/oder den Stator des Generators. Optional kann zusätzlich dazu eine Flüssigkeitskühlung des Stators und/oder des Rotors erfolgen.

Im Bereich des Generators, insbesondere in Luft-Strömungsrichtung hinter dem Generator, ist mindestens ein Luftauslass vorgesehen. Dieser mindestens eine Luftauslass kann in oder an einem Spinner oder Rotorkopf des aerodynamischen Rotors vorgesehen sein. Alternativ dazu kann der Luftauslass an einem Spalt zwischen dem Rotor und dem Stator liegen, der konstruktiv bedingt vorhanden sein kann.

In oder an dem Luftauslass kann optional ein Labyrinth vorgesehen sein. Dieses Labyrinth kann zur Vermeidung eines Eindringens von Wasser oder Tropfwasser dienen.

Die Außenluft wird somit durch den Lufteinlass eingesaugt, strömt durch den Rückkühler, den Tropfenabscheider, optional den Luftfilter und kühlt dann die zweite Wärmequelle. Anschließend strömt die Luft an oder durch den Generator und kühlt diesen, um anschließend durch die Luftauslässe nach außen zu gelangen.

Die Luft kühlt somit den Rückkühler (und damit die darin fließende Kühlflüssigkeit), die zweite Wärmequelle sowie die erste Wärmequelle in Form des elektrischen Generators, bevor die Luft durch die Luftauslässe nach außen gelangt.

Gemäß einem Aspekt der vorliegenden Erfindung ist sowohl der elektrische Generator als auch die Leistungselektronik zum Umwandeln einer Gleichspannung in eine Wechselspannung sowie optional ein Transformator in der Gondel vorgesehen. Dies ist vorteilhaft, weil damit kein Kabel von der Gondel in den Turmfuß vorgesehen sein muss, wo ansonsten üblicherweise die Leistungselektronik vorgesehen ist. Ein derartiges Kabel ist typischerweise ein Mittelspannungskabel. Da nun die Leistungselektronik in der Gondel vorgesehen ist, wird lediglich ein Hochspannungskabel von der Gondel zum Turmfuß vorgesehen. Hierbei ist darauf hinzuweisen, dass ein derartiges Hochspannungskabel weniger Leitermaterial benötigt, was u. a. zu einer geringeren Verlustleistung führt. Dieser Vorteil wird bei steigender Höhe der Gondel verstärkt, da eine vergrößerte Länge des Spannungskabels auch zu einer vergrößerten Verlustleistung führt.

Ferner ist der Transport einer derartigen Gondel (mit Generator plus Leistungselektronik) vorteilhaft, da die gesamte Gondel inklusive Generator und Leistungselektronik vormontiert zur Baustelle transportiert werden kann. Dadurch können Arbeiten auf der Baustelle erheblich reduziert werden. Des Weiteren kann ein Flüssigkeitskühlsystem in der Gondel bereits während der Vormontage auf Dichtigkeit geprüft werden und mit einem entsprechenden Kühlmittel versehen werden. Des Weiteren können die Kran- und Aufbauzeiten reduziert werden.

Gemäß einem Aspekt der Erfindung kann die Ausgangsspannung der Gondel eine Mittelspannung von >=1000V darstellen.

Weitere Ausgestaltungen der Erfindung sind Gegenstand der Unteransprüche.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung einer Gondel der Windenergieanlage gemäß Fig. 1,
- Fig. 3: zeigt eine schematische Darstellung einer Filterung der einströmenden Luft gemäß einem Aspekt der vorliegenden Erfindung,
- Fig. 4A: zeigt eine schematische Darstellung einer Gondel gemäß einem Ausführungsbeispiel der Erfindung,
- Fig. 4B: zeigt den Schnitt A von Fig. 4A., und
- Fig. 5A und 5B: zeigen jeweils eine vergrößerte Darstellung des Details B von Fig. 4A.

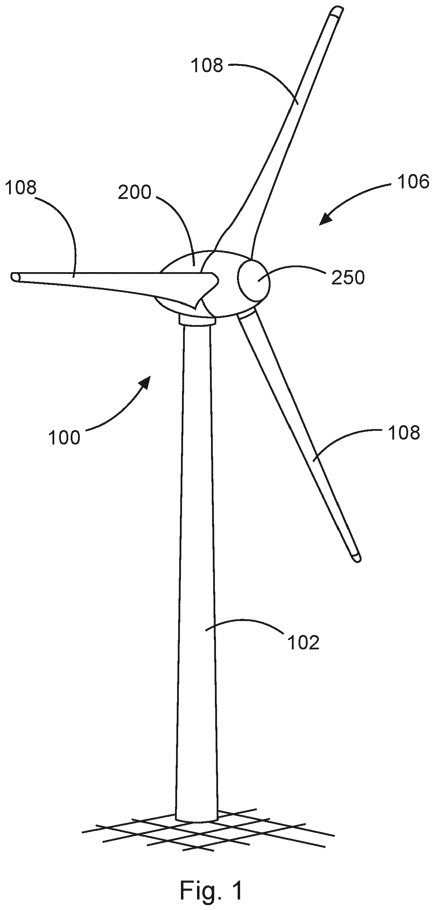

Fig. 1 zeigt eine schematische Darstellung einer Windenergieanlage gemäß einem Aspekt der vorliegenden Erfindung. Die Windenergieanlage 100 weist einen Turm 102 und eine Gondel 200 auf dem Turm 102 auf. An der Gondel 200 ist ein aerodynamischer Rotor 106 mit drei Rotorblättern 108 und einem Spinner 250 vorgesehen. Der Spinner 250 und die Gondel 200 bilden zusammen ein Gehäuse aus, wobei die Gondel feststeht und der Spinner 250 rotiert. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 200 angeordnet und erzeugt elektrische Energie. Die Pitchwinkel der Rotorblätter 108 können durch Pitchmotoren an den Rotorblattwurzeln der jeweiligen Rotorblätter 108 verändert werden.

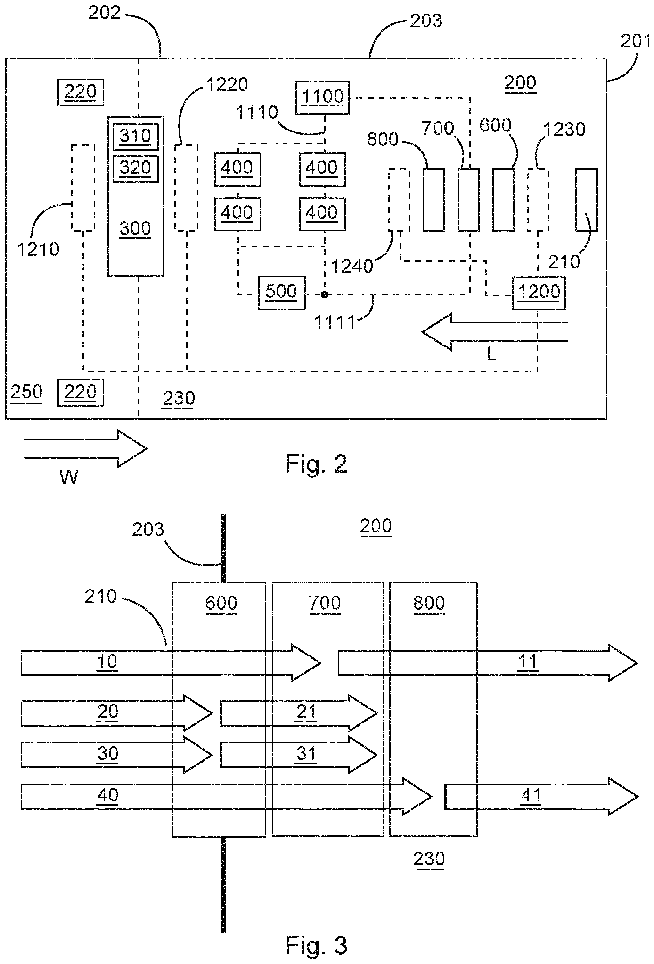

Fig. 2 zeigt eine schematische Darstellung einer Gondel der Windenergieanlage gemäß Fig. 1. Die Gondel 200 weist ein windzugewandtes Ende 202 und ein windabgewandtes Ende 201 auf. Die Gondel 200 weist ein Gehäuse 203 und einen Gondelinnenraum 230 auf. Die Gondel 200 weist an ihrem windabgewandten Ende 201 einen Lufteinlass 210 auf. Der Lufteinlass 210 kann am windabgewandten Ende der Gondel oder im Bereich des windabgewandten Endes seitlich an der Gondel 200 vorgesehen sein. Z. B. in Windströmungsrichtung vor dem Lufteinlass 210 kann eine Luftaufbereitung mit einem Tropfenabscheider 600, einem Rückkühler 700 und optional einem Luftfilter 800 vorgesehen sein. Des Weiteren ist ein Lüfter 910, 920, 940, 930 vorgesehen und erzeugt einen Luftstrom L in einer Luftstromrichtung. Hierbei strömt die durch den Lufteinlass 210 eingesaugte Luft durch die Luftaufbereitung mit dem Tropfenabscheider und dem Rückkühler 700 vorbei zum windzugewandten Ende 202 der Gondel.

Gemäß einem Aspekt der Erfindung kann der Lufteinlass 210 seitlich und im windabgewandten Bereich der Gondel vorgesehen sein. Vom Lufteinlass 210 kann die Luft in Luftströmungsrichtung durch den Tropfenabscheider 600, den Rückkühler 700 und optional den Luftfilter 800 strömen.

Innerhalb der Gondel ist zumindest teilweise (beispielsweise der Stator) eines elektrischen Generators 300 vorgesehen. Ein Teil des Generators 300 kann sich in dem Spinner 250 befinden. Dieser elektrische Generator erzeugt Verlustwärme und stellt eine erste Wärmequelle oder einen ersten Wärmeerzeuger dar. Zwischen dem elektrischen Generator 300 und dem Rückkühler 700 ist mindestens eine erste elektrische Vorrichtung 400 vorgesehen. Die mindestens eine elektrische Vorrichtung 400 erzeugt Verlustwärme und stellt eine zweite Wärmequelle oder einen zweiten Wärmeerzeuger dar. Die elektrische Vorrichtung 400 kann als eine Leistungselektronikvorrichtung, ein Gleichrichter, ein Wechselrichter, ein Umrichter und/oder als ein Transformator ausgestaltet sein.

Damit sind in der Gondel zwei Wärmequellen, nämlich die erste Wärmequelle 300 und die zweite Wärmequelle 400, 500, vorhanden. Diese beiden Wärmequellen erzeugen jeweils eine Verlustwärme, welche so groß werden kann, dass die erste und/oder zweite Wärmequelle 300, 400, 500 gekühlt werden muss.

Zur Kühlung der ersten und/oder zweiten Wärmequelle weist die Windenergieanlage ein Kühlsystem 1000 auf. Dieses Kühlsystem ist als ein hybrides Kühlsystem ausgestaltet und weist ein Flüssigkeitskühlsystem 1100 und ein Luftkühlsystem 1200 auf. Das Luftkühlsystem 1200 weist einen Lüfter oder einen Lüftersatz 910, 920, 930, 940 auf. Der Lüfter oder der Lüftersatz 910 - 940 kann an mindestens vier Positionen innerhalb der Gondel der Windenergieanlage vorgesehen sein und erzeugt einen Luftstrom mit einer Luftstromrichtung L, welche entgegengesetzt ist zu der Windströmungsrichtung W. Die Luftstromrichtung L erstreckt sich somit vom windabgewandten Ende 201 der Gondel zu dem windzugewandten Ende 202 der Gondel 200. Damit ist die Strömungsrichtung entgegengesetzt zu der Windströmungsrichtung außerhalb der Gondel. Der Luftstrom streicht somit an dem Rückkühler 700, der mindestens einen elektrischen Vorrichtung 400 und dem Generator 300 vorbei. Die Gondel weist ferner mindestens einen Luftauslass 220 im Bereich des ersten Endes 202 der Gondel 200 auf. Die Gondel 200 weist ein Gehäuse 203 auf, welches einen Gondelinnenraum 230 umschließt.

Gemäß der Erfindung wird der Luftstrom innerhalb der Gondel durch den Lüfter bzw. den einen Lüftersatz erzeugt. Innerhalb der Gondel 200 ist ein Flüssigkeitskühlsystem 1100 vorgesehen. Das Flüssigkeitskühlsystem 1100 weist Kühlleitungen 1110 auf, welche mit den elektrischen Vorrichtungen 400 gekoppelt sind, um diese zu kühlen. Somit fließt eine Kühlflüssigkeit 1111 durch die Kühlleitungen 1110 und kühlt die elektrischen Vorrichtungen 400. Die dadurch erwärmte Kühlflüssigkeit fließt dann durch den Rückkühler 700 und über eine weitere Leitung 1110 zurück zum Kühlsystem 1100. Der Rückkühler 700 dient somit als Wärmetauscher und soll die in den Leitungen 1110 befindliche Kühlflüssigkeit 1111 kühlen. Dies erfolgt durch den Luftstrom.

Gemäß einem Aspekt der vorliegenden Erfindung kann optional der Generator zumindest teilweise mit dem Flüssigkeitskühlsystem gekoppelt sein, so dass der Generator zumindest teilweise durch die Kühlflüssigkeit 1111 in dem Kühlsystem 1100 gekühlt wird.

Gemäß einem Aspekt der vorliegenden Erfindung wird somit ein Kühlsystem für eine Windenergieanlage vorgesehen, wobei das Kühlsystem ein Hybridkühlsystem ist, welches eine Flüssigkeitskühlung und eine Luftkühlung aufweist. Die Luftkühlung wird durch einen Lüfter bzw. einen Lüftersatz bewirkt. Damit ist der Lüfter bzw. der Lüftersatz nicht an mehreren Positionen innerhalb der Gondel angeordnet, sondern weist lediglich eine Position auf. Ein Lüftersatz gemäß der Erfindung stellt eine Lüftereinheit dar, wobei mehrere Lüfter innerhalb eines Gehäuses vorgesehen sind. Der Lüfter kann somit als ein einzelner Lüfter oder als ein Lüftersatz innerhalb eines gemeinsamen Gehäuses ausgestaltet sein.

Der Tropfenabscheider 600 ermöglicht ein mechanisches Trennverfahren insbesondere basierend auf Fliehkräften, um Wasserpartikel oder Flüssigkeitspartikel aus der einströmenden Luft abzuscheiden. Hierbei können Flüssigkeitspartikel mit kleinen Tropfengrößen (< 20 µm) nicht von der einströmenden Luft getrennt werden. Die abgeschiedenen bzw. durch den Tropfenabscheider abgetrennten Flüssigkeitspartikel können durch die Erwärmung an dem Rückkühler 70 verdampfen. Hierbei können in der Flüssigkeit vorhandene Feststoffe (Salz, Sand, etc.) kristallisiert werden. Durch den Rückkühler 700 wird somit ein thermisches Trennverfahren ermöglicht.

Die aus der Flüssigkeit auskristallisierten Feststoffe können durch den nachfolgenden Luftfilter herausgefiltert werden.

Damit wird eine Vorkonditionierung der Luft (Entfernen von Flüssigkeitspartikeln mittels des Tropfenabscheiders und Entfernen von Feststoffen durch den Luftfilter) in dem Luftstrom erreicht, bevor die Luft auf die elektrischen Vorrichtungen trifft.

Fig. 3 zeigt eine schematische Darstellung einer Filterung der einströmenden Luft gemäß einem Aspekt der vorliegenden Erfindung. Außenluft 10 tritt gemäß einem Aspekt der vorliegenden Erfindung durch einen Lufteinlass 210 (am windabgewandten Ende oder seitlich an der Gondel im Bereich des windabgewandten Endes) in das Innere 230 der Gondel ein und trifft auf den Tropfenabscheider 600, wo der Luft Wasser und Feuchtigkeit entzogen wird. Damit weist die Luft lediglich eine Restfeuchte 21 und in der Luft gelöste Feststoffe oder Festpartikel auf. Der Rückkühler 700 erwärmt die einströmende Luft, wobei die Flüssigkeitspartikel, welche durch den Tropfenabscheider nicht aus der Luft entfernt worden sind (beispielsweise weil sie zu klein sind), verdampfen, so dass in der Flüssigkeit vorhandene Feststoffe auskristallisieren können. Der Rückkühler 700 dient als Wärmetauscher, so dass die Außenluft zu einem vorgewärmten Luftstrom 11 erwärmt wird. Feststoffe 40 (z. B. Sand, Staub, etc.) in der Außenluft können durch den Luftfilter 800 gefiltert werden, so dass beispielsweise lediglich Feinstaubpartikel 41 übrig bleiben, welche < 20 µm sind.

Somit kann durch die Kombination eines Tropfenabscheiders, der Rückkühlereinheit und des Luftfilters eine Luftkühlung des Generators durch eine dreifache Luftaufbereitung erfolgen.

Gemäß der Erfindung weist die Gondel im Wesentlichen den mindestens einen Lufteinlass und den mindestens einen Luftauslass auf. Damit kann gewährleistet werden, dass die sich innerhalb der Gondel befindliche Luft sowohl im Wesentlichen frei von Wasserpartikeln und Feuchtigkeit ist sowie im Wesentlichen frei von anderen Partikeln in der Luft ist. Die hierzu erforderliche Luftaufbereitung kann dann erfindungsgemäß sowohl zur Kühlung des Generators als auch zur Kühlung der elektrischen Vorrichtung innerhalb der Gondel verwendet werden.

Mit dem erfindungsgemäßen Kühlsystem kann eine Erhöhung der Luftqualität durch eine vorgetrocknete und entsalzte Luft vorgesehen sein. Ferner kann ein Eindringen von grober Feuchtigkeit wie beispielsweise Schnee oder Nebel verhindert werden. Des Weiteren kann die Anzahl der benötigten Bauteile reduziert werden.

Wenn der Lüfter nicht wie sonst am zweiten Ende der Gondel sondern vielmehr innerhalb der Gondel vorgesehen wird, dann kann dies zu einer erheblichen Reduzierung der Schallemission beitragen.

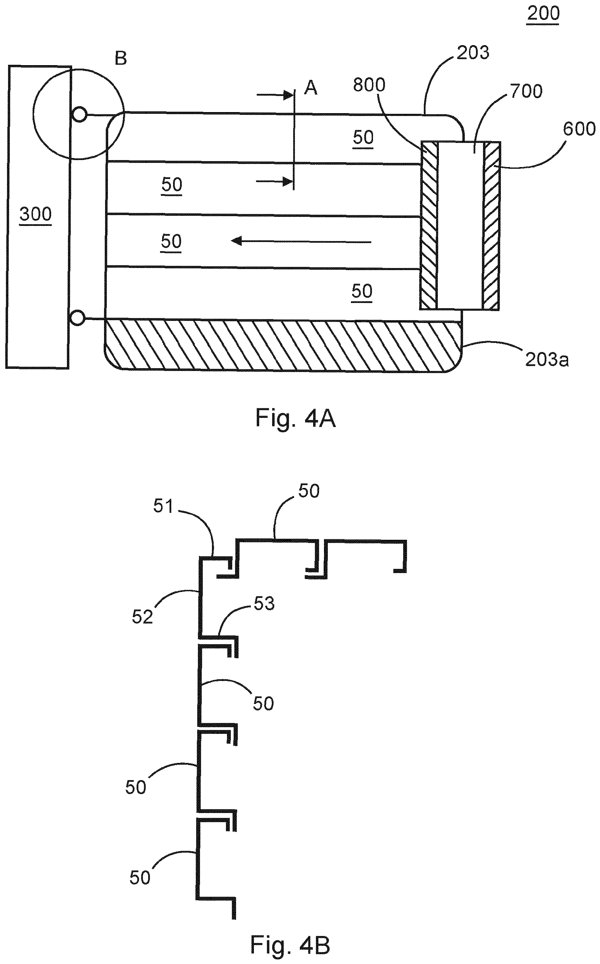

Fig. 4A zeigt eine schematische Darstellung einer Gondel gemäß einem Ausführungsbeispiel der Erfindung. Die Gondel 200 weist ein Gondelgehäuse 203 mit einem Gondelboden 203a, welcher in Form einer Auffangwanne ausgestaltet ist, auf. Das Gondelgehäuse 203 weist ferner eine Mehrzahl von Kassettenelementen 50 auf, welche zusammen zumindest teilweise das Gondelgehäuse ausbilden. Die Kassettenelemente bzw. Verkleidungskassetten 50 können sich überlappen, so dass ein Gondelgehäuse 203 mit einer ausreichenden Dichtung vorgesehen werden kann.

Fig. 4B zeigt den Schnitt A von Fig. 4A. Hierbei sind mehrere Kassettenelemente bzw. Verkleidungskassetten 50 vorgesehen, welche miteinander befestigt sind bzw. aneinander anliegen, um eine Abdichtung des Gondelgehäuses 203 zu erreichen. Eine Verkleidungskassette bzw. ein Kassettenelement 50 kann hierbei eine erstes Ende 51, einen mittleren Abschnitt 52 und ein zweites Ende 53 aufweisen. Das erste und zweite Ende 51, 52 sind hierbei beispielsweise in einem Winkel von 90° zum mittleren Element 52 vorgesehen. Ein erstes Ende 51 einer Verkleidungskassette 50 kann beispielsweise an einem zweiten Ende 53 einer anderen Verkleidungskassette 50 anliegen, um zumindest einen Teil des Gondelgehäuses 203 auszubilden.

Durch die Ausgestaltung des ersten und zweiten Endes 51, 53 kann gewährleistet werden, dass die Kassettenelemente bzw. Verkleidungskassetten derart dicht aneinander anliegen, dass auch das Gondelgehäuse über eine ausreichende Abdichtung verfügt. Dies ist insbesondere vorteilhaft, um zu verhindern, dass der durch die Lüfter erzeugte Luftstrom L über die Verbindungsstellen der Kassettenelemente 50 nach außen dringen kann. Ferner kann damit auch verhindert werden, dass nicht gereinigte Außenluft in das Gondelinnere eindringen kann.

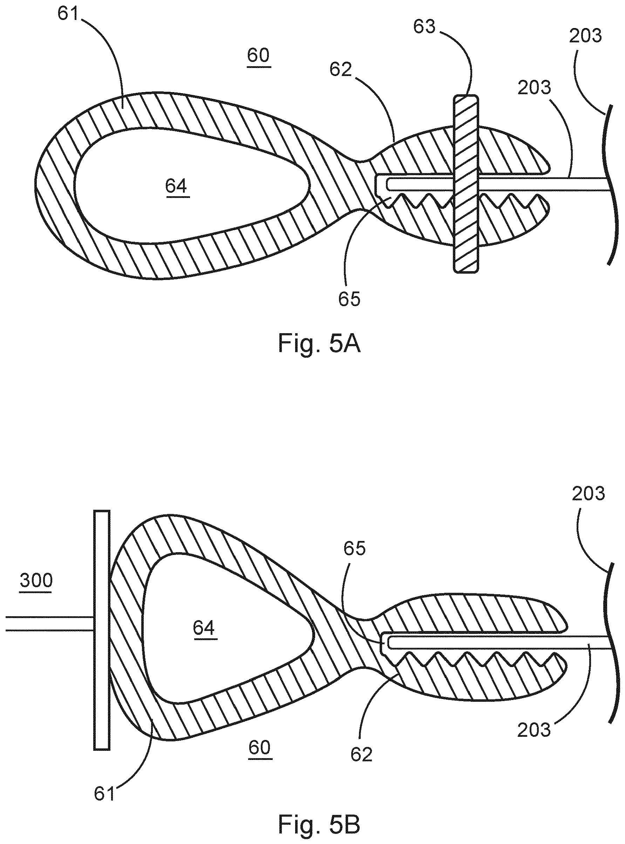

Fig. 5A und 5B zeigen jeweils eine vergrößerte Darstellung des Details B von Fig. 4A. Beim Detail B wird insbesondere die Abdichtung zwischen der Gondel und dem Generatorgehäuse gezeigt. Gemäß einem Aspekt der vorliegenden Erfindung wird eine Balgdichtung zwischen dem Gehäuse des Generators und dem Gondelgehäuse vorgesehen. Die Balgdichtung ist vorzugsweise stoßseitig an der Gondelverkleidung befestigt. Der komprimierbare Balg kann sich an die Oberfläche des Generatorgehäuses anschmiegen, um den Übergang zwischen Gondelgehäuse und Generator abzudichten.

Die Balgdichtung 60 weist ein erstes und zweites Ende 61, 62 auf. Das erste Ende 61 weist in ihrer Mitte einen Hohlraum 64 auf und kann bei Kontakt gestaucht werden, wie in Fig. 5B gezeigt. Das zweite Ende 62 weist eine Ausnehmung 65 auf, welche einen Teil des Gondelgehäuses 203 aufnimmt. Das zweite Ende 62 kann optional mittels einer Befestigungseinheit 63 (z.B. eine Klemme oder Niete) an dem Gondelgehäuse 203 befestigt werden. Wie in Fig. 5B zu sehen kann das erste Ende 61 der Balgdichtung 60 im gestauchten Zustand an dem Generator 300 (bzw. dessen Gehäuse) anliegen, um den Übergang zwischen Gondelgehäuse und Generator abzudichten.

Durch die beiden oben genannten Maßnahmen (Ausgestaltung des Gondelgehäuses mit Kassettenelementen und Abdichtung des Übergangs zwischen Generatorgehäuse und Gondel) kann erfindungsgemäß erreicht werden, dass die Gondel sowie der Übergang von der Gondel zu dem Generator über eine ausreichende Dichtigkeit verfügt, so dass der aufbereitete Luftstrom durch die Gondel zum Generator strömen kann. Ferner wird verhindert, dass nicht aufbereitete Außenluft in das Innere der Gondel gelangen kann.

Gemäß einem weiteren Aspekt der vorliegenden Erfindung kann der Lüfter so betrieben werden, dass ein Überdruck in dem Gondelinnenraum herrscht, um zu vermeiden, dass nicht aufbereitete Außenluft nach innen gelangen kann.

Der als Auffangwanne ausgestaltete Gondelboden 203a ist vorteilhaft, weil damit auslaufende Flüssigkeit wie beispielsweise das Kühlmittel sicher aufgefangen werden kann. Damit kann verhindert werden, dass bei einem Leck Kühlmittel austritt und aus der Gondel ausläuft. Damit können auch strengere Umweltauflagen eingehalten werden.

## Patentansprüche

1. Windenergieanlage (100), mit
einer Gondel (200) mit einem ersten Ende (201) und einem zweiten Ende (202), mindestens einem Lufteinlass (210) sowie einem Gondelgehäuse (203) mit einem Gondelinnenraum (230),
einer ersten Wärmequelle (300) in Form eines elektrischen Generators (300), wobei der Generator (300) elektrische Energie und erste Verlustwärme erzeugt,
einer zweiten Wärmequelle (400) in Form von mindestens einer elektrischen Vorrichtung (400, 500) zur Umwandlung der von dem Generator (300) erzeugten elektrischen Energie in dem Gondelinnenraum (230), wobei die elektrischen Vorrichtungen (400, 500) zweite Verlustwärme erzeugen und in dem Gondelgehäuse (203) angeordnet sind,
einem Kühlungssystem (1000) mit einem Flüssigkeitskühlsystem (1100) und einem Luftkühlsystem (1200) für die erste und zweite Wärmequelle (400, 500),
wobei in dem Gondelinnenraum (230) eine Luftaufbereitung (600, 700) vorgesehen ist, welche einen Tropfenabscheider (600) und einen Rückkühler (700) aufweist,
wobei der Tropfenabscheider (600) dazu ausgestaltet ist, die durch den Lufteinlass (210) einströmende Luft von Flüssigkeitstropfen zu befreien,
wobei das Luftkühlungssystem (1200) einen Lüfter (1210 - 1240) oder einen Lüftersatz (910 - 940) in Form einer Mehrzahl von Lüftern in einem einzigen Gehäuse in dem Gondelinnenraum (230) aufweist,
wobei der Lüfter (1210 - 940) oder der Lüftersatz (1210 - 940) eine Luftströmung in Luftströmungsrichtung (L) innerhalb der Gondel (200) erzeugt, welche den Rückkühler (700) umströmt,
wobei das Flüssigkeitskühlsystem (1100) eine Kühlflüssigkeit (1111) aufweist und zumindest mit der zweiten Wärmequelle (400) gekoppelt ist und dazu ausgestaltet ist, die zweite Wärmequelle (400) zu kühlen,
wobei das Flüssigkeitskühlsystem (1100) mit dem Rückkühler (700) gekoppelt ist, welcher als Wärmetauscher dient, wobei die Luftströmung in Luftstromrichtung den Rücckühler (700) kühlt, der wiederum die Kühlflüssigkeit (1111) kühlt,
wobei die Luftströmung (L) die erste und zweite Wärmequelle (300, 400, 500) umströmt und damit die erste und zweite Wärmequelle (300, 400, 500) kühlt.

2. Windenergieanlage (100) nach Anspruch 1, wobei
die Luftaufbereitung (600, 700, 800) einen Luftfilter (800) in Luftströmungsrichtung (L) hinter dem Rückkühler (700) aufweist, wobei der Luftfilter (800) dazu ausgestaltet ist, die durch den Tropfenabscheider von Wasser und Flüssigkeitstropfen zumindest teilweise befreite Luft weiter von Feststoffen zu filtern.

3. Windenergieanlage (100) nach Anspruch 1 oder 2, wobei
das Gondelgehäuse (203) einen Gondelboden (203a) in Form einer Auffangwanne sowie eine Mehrzahl von Kassettenelementen (50) aufweist, welche zusammen mit dem Gondelboden (203a) das Gondelgehäuse (203) ausbilden.

4. Windenergieanlage (100) nach einem der Ansprüche 1 bis 3,
wobei die Windenergieanlage (100) einen Generator (300) sowie eine Dichtung (60) zwischen dem Gondelgehäuse (203) und dem Generator (300) aufweist.

5. Windenergieanlage (100) nach einem der Ansprüche 1 bis 4, ferner mit
einem weiteren Rückkühler außen an dem Gondelgehäuse, wobei der weitere Rücckühler mit dem Flüssigkeitskühlsystem (1100) gekühlt ist, wobei Kühlflüssigkeit (1111) durch den weiteren Rückkühler fließt.

6. Verfahren zum Kühlen von Wärmequellen in einer Windenergieanlagen-Gondel (200), wobei die Gondel (200) ein erstes Ende (201) und ein zweites Ende (202), mindestens einem Lufteinlass (210) sowie einem Gondelgehäuse (203) mit einem Gondelinnenraum (230) aufweist,
wobei eine erste Wärmequelle (300) in Form eines elektrischen Generators (300) in der Gondel (200) vorgesehen ist, wobei der Generator (300) elektrische Energie und erste Verlustwärme erzeugt,
wobei eine zweite Wärmequelle (400) in Form von mindestens einer elektrischen Vorrichtung (400, 500) zur Umwandlung der von dem Generator (300) erzeugten elektrischen Energie in der Gondel (200) vorgesehen ist, wobei die elektrischen Vorrichtungen (400, 500) zweite Verlustwärme erzeugen und in dem Gondelgehäuse (203) angeordnet sind,
wobei ein Kühlungssystem (1000) mit einem Flüssigkeitskühlsystem (1100) und einem Luftkühlsystem (1200) für die erste und zweite Wärmequelle (400, 500) in dem Gondelgehäuse vorgesehen ist,
wobei in dem Gondelinnenraum (230) eine Luftaufbereitung (600, 700) vorgesehen ist, welche einen Tropfenabscheider (600) und einen Rückkühler (700) aufweist,
wobei der Tropfenabscheider (600) dazu ausgestaltet ist, die durch den Lufteinlass (210) einströmende Luft von Flüssigkeitstropfen zu befreien,
wobei das Luftkühlungssystem (1200) einen Lüfter (1210 - 1240) oder einen Lüftersatz (910 - 940) in Form einer Mehrzahl von Lüftern in einem einzigen Gehäuse in dem Gondelinnenraum (230) aufweist, mit den Schritten:
Erzeugen einer Luftströmung in Luftströmungsrichtung (L) innerhalb der Gondel (200) durch den Lüfter (1210 - 940) oder der Lüftersatz (1210 - 940), wobei die Luftströmung den Rückkühler (700) umströmt,
Kühlen der zweiten Wärmequelle (400) durch das Flüssigkeitskühlsystem (1100), welches eine Kühlflüssigkeit (1111) aufweist, welches mit der zweiten Wärmequelle (400) gekoppelt ist
wobei das Flüssigkeitskühlsystem (1100) mit dem Rückkühler (700) gekoppelt ist, welcher als Wärmetauscher dient, wobei die Luftströmung in Luftstromrichtung den Rücckühler (700) kühlt, der wiederum die Kühlflüssigkeit (1111) kühlt,
wobei die Luftströmung (L) die erste und zweite Wärmequelle (300, 400, 500) umströmt und damit die erste und zweite Wärmequelle (300, 400, 500) kühlt.

## Claims

1. A wind turbine (100), with
a nacelle (200) with a first end (201) and a second end (202), at least one air inlet (210) and one nacelle housing (203) with a nacelle interior (230),
a first heat source (300) in the form of an electric generator (300), wherein the generator (300) generates electrical energy and a first heat loss,
a second heat source (400) in the form of at least one electrical device (400, 500) for converting the electrical energy generated by the generator (300) in the nacelle interior (230), wherein the electrical devices (400, 500) generate a second heat loss, and are arranged in the nacelle housing (203),
a cooling system (1000) with a liquid cooling system (1100) and an air cooling system (1200) for the first and second heat source (400, 500),
wherein an air treatment unit (600, 700) is provided in the nacelle interior (230), which has a droplet separator (600) and a recirculating chiller (700),
wherein the droplet separator (600) is designed to free the air flowing in through the air inlet (210) of liquid droplets,
wherein the air cooling system (1200) has a fan (1210-1240) or a fan set (910-940) in the form of multiple fans in a single housing in the nacelle interior (230),
wherein the fan (1210-940) or the fan set (1210-940) generates an air flow in the direction of air flow (L) within the nacelle (200), which flows around the recirculating chiller (700),
wherein the liquid cooling system (1100) has a coolant (1111), and is coupled at least with the second heat source (400), and designed to cool the second heat source (400),
wherein the liquid cooling system (1100) is coupled with the recirculating chiller (700), which serves as a heat exchanger, wherein the air flow cools the recirculating chiller (700) in the direction of air flow, which in turn cools the coolant (1111),
wherein the air flow (L) flows around the first and second heat source (300, 400, 500), and thus cools the first and second heat source (300, 400, 500).

2. The wind turbine (100) according to claim 1, wherein
the air treatment unit (600, 700, 800) has an air filter (800) in the direction of air flow (L) behind the recirculating chiller (700), wherein the air filter (800) is designed to further filter solids from air at least partially freed of water and liquid droplets by the droplet separator.

3. The wind turbine (100) according to claim 1 or 2, wherein
the nacelle housing (203) has a nacelle floor (203a) in the form of a collecting tray, as well as a plurality of cassette elements (50), which together with the nacelle floor (203a) comprise the nacelle housing (203).

4. The wind turbine (100) according to one of claims 1 to 3, wherein
the wind turbine (100) has a generator (300) as well as a seal (60) between the nacelle housing (203) and the generator (300).

5. The wind turbine (100) according to one of claims 1 to 4, further with
an additional recirculating chiller outside on the nacelle housing, wherein the additional recirculating chiller is cooled with the liquid cooling system (1100), wherein coolant (1111) flows through the additional recirculating chiller.

6. A method for cooling heat sources in a wind turbine nacelle (200), wherein the nacelle (200) has a first end (201) and a second end (202), at least one air inlet (210) as well as a nacelle housing (203) with a nacelle interior (230),
wherein a first heat source (300) in the form of an electric generator (300) is provided in the nacelle (200), wherein the generator (300) generates electrical energy and first heat loss,
wherein a second heat source (400) in the form of at least one electrical device (400, 500) for converting the electrical energy generated by the generator (300) is provided in the nacelle interior (200), wherein the electrical devices (400, 500) generate second heat loss, and are arranged in the nacelle housing (203),
wherein a cooling system (1000) with a liquid cooling system (1100) and an air cooling system (1200) for the first and second heat source (400, 500) is provided in the nacelle housing,
wherein an air treatment unit (600, 700) is provided in the nacelle interior (230), which has a droplet separator (600) and a recirculating chiller (700),
wherein the droplet separator (600) is designed to free the air flowing through the air inlet (210) of liquid droplets,
wherein the air cooling system (1200) has a fan (1210-1240) or a fan set (910-940) in the form of multiple fans in a single housing in the nacelle interior (230), with the following steps:
generating an air flow in the direction of air flow (L) within the nacelle (200) through the fan (1210-940) or the fan set (1210-940), wherein the air flow flows around the recirculating chiller (700),
cooling the second heat source (400) via the liquid cooling system (1100), which has a coolant (1111) coupled with the second heat source (400),
wherein the liquid cooling system (1100) is coupled with the recirculating chiller (700), which serves as a heat exchanger, wherein the air flow in the direction of air flow cools the recirculating chiller (700), which in turn cools the coolant (1111),
wherein the air flow (L) flows around the first and second heat source (300, 400, 500), and thus cools the first and second heat source (300, 400, 500).

## Revendications

1. Éolienne (100) avec
une nacelle (200) avec une première extrémité (201) et une deuxième extrémité (202), au moins une admission d'air (210) ainsi qu'un boîtier de nacelle (203) avec un espace intérieur de nacelle (230),
une première source de chaleur (300) sous la forme d'un générateur électrique (300), dans laquelle le générateur (300) produit de l'énergie électrique et une première chaleur perdue,
une deuxième source de chaleur (400) sous la forme d'au moins un dispositif électrique (400, 500) pour la conversion de l'énergie électrique produite par le générateur (300) dans l'espace intérieur de nacelle (230), dans laquelle les dispositifs électriques (400, 500) produisent une deuxième chaleur perdue et sont agencés dans le boîtier de nacelle (203),
un système de refroidissement (1000) avec un système de refroidissement à liquide (1100) et un système de refroidissement à air (1200) pour la première et la deuxième source de chaleur (400, 500),
dans laquelle une préparation d'air (600, 700) est prévue dans l'espace intérieur de nacelle (230), laquelle présente un séparateur de gouttes (600) et un refroidisseur (700),
dans laquelle le séparateur de gouttes (600) est configuré afin de libérer l'air, affluant par l'admission d'air (210), de gouttes de liquide,
dans laquelle le système de refroidissement à air (1200) présente un ventilateur (1210-1240) ou un groupe moto-ventilateur (910-940) sous la forme d'une pluralité de ventilateurs dans un seul boîtier dans l'espace intérieur de nacelle (230),
dans laquelle le ventilateur (1210-940) ou le groupe moto-ventilateur (1210-940) produit un courant d'air dans le sens du courant d'air (L) à l'intérieur de la nacelle (200) qui contourne le refroidisseur (700),
dans laquelle le système de refroidissement à liquide (1100) présente un liquide de refroidissement (1111) et est couplé au moins à la deuxième source de chaleur (400) et est configuré afin de refroidir la deuxième source de chaleur (400),
dans laquelle le système de refroidissement à liquide (1100) est couplé à le refroidisseur (700) qui sert d'échangeur de chaleur, dans laquelle le courant d'air refroidit dans le sens du courant d'air le refroidisseur (700) qui refroidit à son tour le liquide de refroidissement (1111),
dans laquelle le courant d'air (L) contourne la première et la deuxième source de chaleur (300, 400, 500) et refroidit ainsi la première et la deuxième source de chaleur (300, 400, 500).

2. Éolienne (100) selon la revendication 1, dans laquelle
la préparation d'air (600, 700, 800) présente, derrière le refroidisseur (700) dans le sens du courant d'air (L), un filtre à air (800), dans laquelle le filtre à air (800) est configuré afin de continuer à filtrer l'air, libéré au moins partiellement par le séparateur de gouttes d'eau et de gouttes de liquide, de substances solides.

3. Éolienne (100) selon la revendication 1 ou 2, dans laquelle
le boîtier de nacelle (203) présente un fond de nacelle (203a) sous la forme d'une cuve collectrice ainsi qu'une pluralité d'éléments de cassette (50) qui constituent le boîtier de nacelle (203) conjointement avec le fond de nacelle (203a).

4. Éolienne (100) selon l'une quelconque des revendications 1 à 3,
dans laquelle l'éolienne (100) présente un générateur (300) ainsi qu'un joint étanche (60) entre le boîtier de nacelle (203) et le générateur (300).

5. Éolienne (100) selon l'une quelconque des revendications 1 à 4, de plus avec
un autre refroidisseur à l'extérieur au niveau du boîtier de nacelle, dans laquelle l'autre refroidisseur est refroidi par le système de refroidissement à liquide (1100), dans laquelle le liquide de refroidissement (1111) s'écoule à travers l'autre refroidisseur.

6. Procédé de refroidissement de sources de chaleur dans une nacelle d'éolienne (200), dans lequel la nacelle (200) présente une première extrémité (201) et une deuxième extrémité (202), au moins une admission d'air (210) ainsi qu'un boîtier de nacelle (203) avec un espace intérieur de nacelle (230),
dans lequel une première source de chaleur (300) est prévue sous la forme d'un générateur électrique (300) dans la nacelle (200), dans lequel le générateur (300) produit de l'énergie électrique et une première chaleur perdue,
dans lequel une deuxième source de chaleur (400) est prévue sous la forme d'au moins un dispositif électrique (400, 500) pour la conversion de l'énergie électrique produite par le générateur (300) dans la nacelle (200), dans lequel les dispositifs électriques (400, 500) produisent une deuxième chaleur perdue et sont agencés dans le boîtier de nacelle (203),
dans lequel un système de refroidissement (1000) est prévu avec un système de refroidissement à liquide (1100) et un système de refroidissement à air (1200) pour la première et la deuxième source de chaleur (400, 500) dans le boîtier de nacelle,
dans lequel une préparation d'air (600, 700) est prévue dans l'espace intérieur de nacelle (230), laquelle présente un séparateur de gouttes (600) et un refroidisseur (700),
dans lequel le séparateur de gouttes (600) est configuré afin de libérer l'air, affluant à travers l'entrée d'air (210), de gouttes de liquide,
dans lequel le système de refroidissement d'air (1200) présente un ventilateur (1210-1240) ou un groupe moto-ventilateur (910-940) sous la forme d'une pluralité de ventilateurs dans un seul boîtier dans l'espace intérieur de nacelle (230), avec les étapes suivantes :
la production d'un courant d'air dans le sens du courant d'air (L) à l'intérieur de la nacelle (200) par le ventilateur (1210-940) ou le groupe moto-ventilateur (1210-940), dans lequel le courant d'air contourne le refroidisseur (700),
le refroidissement de la deuxième source de chaleur (400) par le système de refroidissement à liquide (1100) qui présente un liquide de refroidissement (1111) qui est couplé à la deuxième source de chaleur (400),
dans lequel le système de refroidissement à liquide (1100) est couplé au refroidisseur (700) qui sert d'échangeur de chaleur, dans lequel le courant d'air refroidit dans le sens du courant d'air le refroidisseur (700) qui refroidit à son tour le liquide de refroidissement (1111),
dans lequel le courant d'air (L) contourne la première et la deuxième source de chaleur (300, 400, 500) et refroidit ainsi la première et la deuxième source de chaleur (300, 400, 500).
